# EUROPEAN PATENT APPLICATION

(11) **EP 4 772 085 A1**
(43) Date of publication of application: **08.07.2026**
(21) Application number: 25793427.3
(22) Date of filing: 14.04.2025
(51) Int. Cl.: A47J 31/44, A47J 31/46, A47J 31/00

(54) **BEVERAGE BREWING MECHANISM AND COFFEE MAKER**

(30) Priority: 22.04.2024 CN 202420841420 U
(71) Applicant: Guangdong Midea Consumer Electric Manufacturing Co., Ltd., Foshan, Guangdong 528311 (CN)
(72) Inventor: YE, Guoyong, Foshan, Guangdong 528311 (CN); LIANG, Ziming, Foshan, Guangdong 528311 (CN); ZHU, Zhigang, Foshan, Guangdong 528311 (CN)
(74) Representative: RGTH
(86) International application number: PCT/CN2025/088699
(87) International publication number: WO 2025/223230

(57) **Abstract**

A beverage brewing mechanism (100) and a coffee maker, which can enrich the flavor of coffee so as to satisfy the taste requirements of different users. The beverage brewing mechanism (100) comprises: a brewing body (1), the brewing body (1) being provided with a brewing compartment (11) and a liquid outlet (111) in communication with the brewing compartment (11); a leakage stop valve (2), which is movably mounted at the liquid outlet (111) and is provided with a liquid output channel (2112), the liquid output channel (2112) being configured to be capable of communicating with the liquid outlet (111) so as to discharge liquid from the brewing body (1); and a driving mechanism (3), which is connected to the leakage stop valve (2) and is configured to drive the leakage stop valve (2) to move relative to the brewing body (1) so as to control connection and disconnection between the liquid output channel (2112) and the liquid outlet (111) and adjust the liquid-output flow rate of the liquid output channel (2112).

## Description

The present application claims priority to Chinese patent application No. 202420841420.1, titled "BEVERAGE BREWING MECHANISM AND COFFEE MAKER" and filed with China National Intellectual Property Administration on April 22, 2024, the entire contents of which are incorporated herein by reference.

### FIELD

The present disclosure relates to the field of coffee machine technologies, and more particularly, to a beverage brewing mechanism and a coffee machine.

### BACKGROUND

Currently, coffee machines are becoming increasingly popular among consumers. In the related art, a coffee machine comprises a beverage brewing mechanism. Coffee raw materials are placed in the brewing chamber of the beverage brewing mechanism, and a container for holding the coffee is positioned below the liquid outlet of the brewing chamber. Hot water is added into the brewing chamber to extract coffee from the raw materials to obtain a coffee beverage, and the coffee flows through the liquid outlet into the container for holding the coffee during the extraction process. However, the resulting coffee has a monotonous flavor, which fails to meet the taste requirements of different users.

### SUMMARY

The technical problem to be solved by the present disclosure is to provide a beverage brewing mechanism and a coffee machine that can enrich flavor of coffee to meet taste requirements of different users.

Embodiments of the present disclosure provide a beverage brewing mechanism. The beverage brewing mechanism comprises: a brewing body having a brewing chamber and a liquid outlet in communication with the brewing chamber; a leak-proof valve movably mounted at the liquid outlet and having a liquid outflow channel, wherein the liquid outflow channel is configured to, when being in communication with the liquid outlet, discharge liquid from the brewing body; and a driving mechanism connected to the leak-proof valve and configured to, by driving the leak-proof valve to move relative to the brewing body, to control the liquid outflow channel and the liquid outlet to be in communication with each other or to be disconnected from each other; and adjust a liquid discharge flow rate of the liquid outflow channel.

The beverage brewing mechanism according to the embodiments of the present disclosure comprises the brewing body, the leak-proof valve, and the driving mechanism. The brewing body has the brewing chamber and the liquid outlet. The brewing chamber is configured to hold raw materials for preparing coffee, such as coffee beans and hot water. The extracted coffee is discharged from the brewing chamber through the liquid outlet and flows into a container for holding the coffee (such as a coffee pot) through the liquid outflow channel of the leak-proof valve for the user to drink. The brewing chamber may be funnel-shaped, and the liquid outlet may be disposed at a bottom of the brewing chamber. The brewing chamber may be provided with a guide rib on an inner wall of the brewing chamber.

The leak-proof valve is configured to control opening and closing of the liquid outlet. When the liquid outflow channel of the leak-proof valve is in communication with the liquid outlet of the brewing chamber, the liquid outlet is opened, allowing the coffee in the brewing chamber to be discharged. When the liquid outflow channel of the leak-proof valve is disconnected from the liquid outlet of the brewing chamber, the liquid outlet is closed, in such a manner that liquid in the brewing chamber cannot be discharged, to avoid wetting a desktop or countertop caused by continuous dripping of liquid (such as residual coffee or residual water remaining in the brewing tank after cleaning) from the brewing chamber after the container for holding the coffee is removed.

The driving mechanism is configured to drive the leak-proof valve to move, to adjust a relative position between the leak-proof valve and the brewing body, enabling opening and closing control of the liquid outlet by the leak-proof valve and regulating a liquid discharge flow rate. The driving mechanism may be an electric driving mechanism, which facilitates automatic control of the leak-proof valve without manual adjustment by the user, improving use experience of the user.

In the related art, no leak-proof valve is disposed at the liquid outlet, or the leak-proof valve only has an open state and a closed state. Therefore, the liquid discharge flow rate is constant, resulting in a monotonous coffee flavor. In the embodiments of the present disclosure, the leak-proof valve can be opened or closed, and closing of the leak-proof valve can enable a steaming of the coffee. In addition, the liquid discharge flow rate of the liquid outflow channel is adjustable and related to a concentration of the extracted coffee. When the liquid discharge flow rate is low, the liquid for coffee extraction stays in the brewing chamber for a relatively long time, in such a manner that the extracted coffee has a high concentration and a full-bodied taste. When the liquid discharge flow rate is high, the liquid for the coffee extraction stays in the brewing chamber for a relatively short time, in such a manner that the extracted coffee has a low concentration and a weaker taste. Therefore, by adjusting the liquid discharge flow rate of the liquid outflow channel, the concentration of the coffee can be regulated, which makes steaming of the coffee controllable, enriching the flavor of the coffee to meet the taste requirements of different users.

Based on the above technical solutions, the present disclosure can be further improved as follows.

In an exemplary embodiment, the leak-proof valve comprises a valve core. The valve core has the liquid outflow channel and a liquid inlet in communication with the liquid outflow channel. The valve core is movably mounted at the liquid outlet and the valve core is configured to control the liquid inlet to be opened or closed and to adjust an opening area of the liquid inlet, enabling the liquid outflow channel and the liquid outlet to be in communication with each other or to be disconnected from each other and enabling the liquid discharge flow rate of the liquid outflow channel to be adjusted. The driving mechanism is connected to the valve core and configured to drive the valve core to move relative to the brewing body.

In an exemplary embodiment, the driving mechanism comprises a driving member and a transmission assembly. The driving member is connected to the transmission assembly and configured to drive the transmission assembly to move. The transmission assembly is connected to the valve core and configured to drive the valve core to move relative to the brewing body. The transmission assembly comprises a transmission member and a linkage member. The transmission member is connected to the driving member and configured to move in a first direction under driving of the driving member. The linkage member cooperates with the transmission member and the valve core and is configured to move in a second direction under driving of the transmission member, to drive the valve core to move in the second direction relative to the brewing body. The second direction is different from the first direction.

In an exemplary embodiment, the transmission member comprises a driving slide block configured to slide in the first direction under the drive of the driving member. The driving slide block has a driving inclined surface. The linkage member has a mating inclined surface. The driving inclined surface is configured to abut against the mating inclined surface to drive the linkage member to move in the second direction.

In an exemplary embodiment, the linkage member comprises a mating slide block and a liquid outflow nozzle disposed on the mating slide block. The mating slide block has the mating inclined surface. The second direction is an axial direction of the liquid outlet. The liquid outflow nozzle is in communication with the liquid outflow channel and abuts against a bottom of the valve core.

In an exemplary embodiment, the valve core comprises a valve stem inserted into the liquid outlet in the second direction. The liquid inlet is disposed on a side wall of the valve stem. The liquid outflow channel is disposed in the valve stem. The valve core further comprises an abutment portion sleeved over an outside of the valve stem and connected to the valve stem. A receiving groove is defined by the abutment portion and the valve stem. The receiving groove has a liquid discharge port at a bottom of the receiving groove. A top of the liquid outflow nozzle abuts against the abutment portion. The liquid outflow nozzle is further in communication with the liquid discharge port.

In an exemplary embodiment, the beverage brewing mechanism further comprises a mounting base. The driving mechanism is mounted on the mounting base. The mounting base has a slide groove extending in the first direction and a guide hole extending in the second direction. The driving slide block is limited in the slide groove and configured to slide along the slide groove. The liquid outflow nozzle extends through the guide hole and is configured to move along the guide hole.

In an exemplary embodiment, the mounting base comprises: a bottom housing; and a cover housing connected to the bottom housing to close the bottom housing. A mounting cavity is defined by the cover housing and the bottom housing. The slide groove is disposed in the mounting cavity. The guide hole is disposed in the cover housing. The driving mechanism is at least partially located in the mounting cavity.

In an exemplary embodiment, the driving slide block and the mating slide block are located in the mounting cavity. The liquid outflow nozzle extends through the mating slide block in the second direction. The liquid outflow nozzle comprises a liquid inflow segment located at a side of the mating slide block close to the leak-proof valve and a liquid outflow segment located at a side of the mating slide block away from the leak-proof valve. The liquid inflow segment extends through the guide hole. The driving slide block has a first avoidance hole configured to avoid the liquid outflow segment. The bottom housing has a second avoidance hole corresponding to the liquid outflow segment. The liquid outflow segment extends through the second avoidance hole when the liquid outflow channel is disconnected from the liquid outlet.

In an exemplary embodiment, the mating slide block has an annular avoidance groove at a bottom of the mating slide block. The avoidance groove is sleeved over an outside of the liquid outflow segment. The bottom housing is provided with an annular limiting protrusion defining the second avoidance hole. The limiting protrusion is received in the avoidance groove when the liquid outflow channel is disconnected from the liquid outlet.

In an exemplary embodiment, the driving mechanism further comprises: a first elastic member cooperating with the linkage member and configured to drive, by means of a restoring force of the first elastic member, the linkage member to move in the second direction away from the valve core; and/or a first sealing member sleeved between the liquid outflow nozzle and the guide hole and configured to seal a gap between the liquid outflow nozzle and the guide hole.

In an exemplary embodiment, the driving member comprises a driving motor and a lead screw connected to the driving motor. The driving slide block internally has a threaded hole. The lead screw is threadedly connected to the threaded hole.

In an exemplary embodiment, the driving slide block has a mounting counterbore. A nut having a threaded hole is provided in the mounting counterbore. The driving slide block further has a third avoidance hole in communication with the threaded hole. The third avoidance hole is configured to avoid a part of the lead screw extending through the nut.

In an exemplary embodiment, the leak-proof valve further comprises a second sealing member sleeved over the valve core and configured to seal the liquid outlet when the leak-proof valve is in a position where the liquid outlet is disconnected from the liquid outflow channel.

In an exemplary embodiment, the beverage brewing mechanism further comprises a second elastic member cooperating with the valve core and configured to drive, by means of a restoring force of the second elastic member, the leak-proof valve to move in a direction to enable the liquid outlet to be disconnected from the liquid outflow channel.

In an exemplary embodiment, the beverage brewing mechanism further comprises a position detection mechanism configured to directly or indirectly detect a position of the leak-proof valve.

In an exemplary embodiment, the leak-proof valve and the driving mechanism are integrated into an electric valve.

The embodiments of the present disclosure further provide a coffee machine. The coffee machine comprises: a base; the beverage brewing mechanism according to any one of the above-described embodiments, the beverage brewing mechanism being mounted on the base; and a control device electrically connected to a driving mechanism of the beverage brewing mechanism and configured to control the driving mechanism according to a predetermined program.

### BRIEF DESCRIPTION OF THE DRAWINGS

FIG. 1 is a schematic perspective view of a structure of a coffee machine according to some embodiments of the present disclosure.
FIG. 2 is a schematic front view of a structure of the coffee machine shown in FIG. 1.
FIG. 3 is a schematic cross-sectional structural view of the coffee machine shown in FIG. 2 along A-A direction in a first state.
FIG. 4 is a schematic cross-sectional structural view of the coffee machine shown in FIG. 2 along A-A direction in a second state.
FIG. 5 is a schematic enlarged structural view of a part B in FIG. 3.
FIG. 6 is a schematic enlarged structural view of a part C in FIG. 4.
FIG. 7 is a schematic perspective structural view of a valve core according to some embodiments of the present disclosure.
FIG. 8 is a schematic assembly view of a driving mechanism and a mounting base according to some embodiments of the present disclosure.
FIG. 9 is a schematic perspective view of a structure shown in FIG. 8 with a cover housing removed, viewed from another perspective.
FIG. 10 is a schematic perspective view of a structure shown in FIG. 9 with a bottom housing removed, viewed from yet another perspective.
FIG. 11 is a schematic perspective view of a structure shown in FIG. 10, viewed from yet another perspective.
FIG. 12 is a schematic view of a structure shown in FIG. 11 with a transmission member and a linkage member removed.
FIG. 13 is a schematic perspective view of a structure of a driving slide block according to some embodiments of the present disclosure.
FIG. 14 is a schematic perspective view of a structure of a linkage member according to some embodiments of the present disclosure.
FIG. 15 is a schematic perspective view of a structure of the linkage member shown in FIG. 14 viewed from another perspective.

In the accompanying drawings, the list of components represented by each reference numeral is as follows:
100 beverage brewing mechanism;
1 brewing body, 11 brewing chamber, 111 liquid outlet, 112 guide rib, 113 step groove, 114 first hollow cylindrical portion, 115 second hollow cylindrical portion, 12 cup housing;
2 leak-proof valve, 21 valve core, 211 valve stem , 2111 liquid inlet, 2112 liquid outflow channel, 2113 sealing groove, 212 abutment portion, 2121 receiving groove, 2122 liquid discharge port, 22 second sealing member, 23 second elastic member;
3 driving mechanism, 31 driving member, 311 driving motor, 312 lead screw, 32 transmission member, 321 driving slide block, 3211 first avoidance hole, 3212 driving inclined surface, 3213 mounting counterbore, 3214 third avoidance hole, 322 nut, 323 screw, 33 linkage member, 331 mating slide block, 3311 mating inclined surface, 3312 avoidance groove, 3313 second mounting groove, 3314 limiting recess, 332 liquid outflow nozzle, 3321 liquid inflow segment, 3322 liquid outflow segment, 3323 transition segment, 34 first elastic member, 35 first sealing member, 351 sealing body, 352 first lip, 353 second lip, 36 connector;
4 mounting base, 41 cover housing, 411 guide hole, 413 mounting notch, 414 limiting recess, 415 limiting step, 42 bottom housing, 421 limiting protrusion, 422 second avoidance hole, 423 second guide rib, 43 mounting cavity, 44 slide groove, 441 stopping portion;
5 position detection mechanism;
200 coffee pot, 300 base, 400 water addition mechanism.

### DETAILED DESCRIPTION OF THE EMBODIMENTS

The principles and features of the present disclosure are described below with reference to the accompanying drawings. The examples provided are only for illustrative purposes and are not intended to limit the scope of the present disclosure.

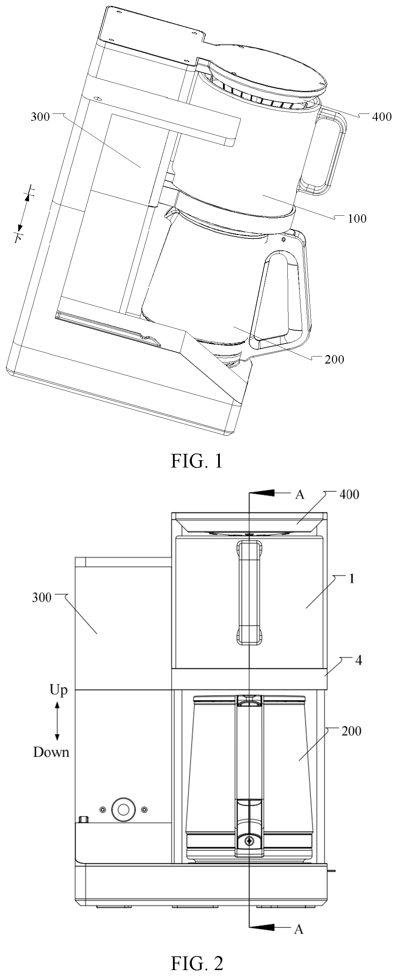

As illustrated in FIG. 1 to FIG. 6, embodiments of the present disclosure provide a beverage brewing mechanism 100. The beverage brewing mechanism 100 comprises: a brewing body 1, a leak-proof valve 2, and a driving mechanism 3.

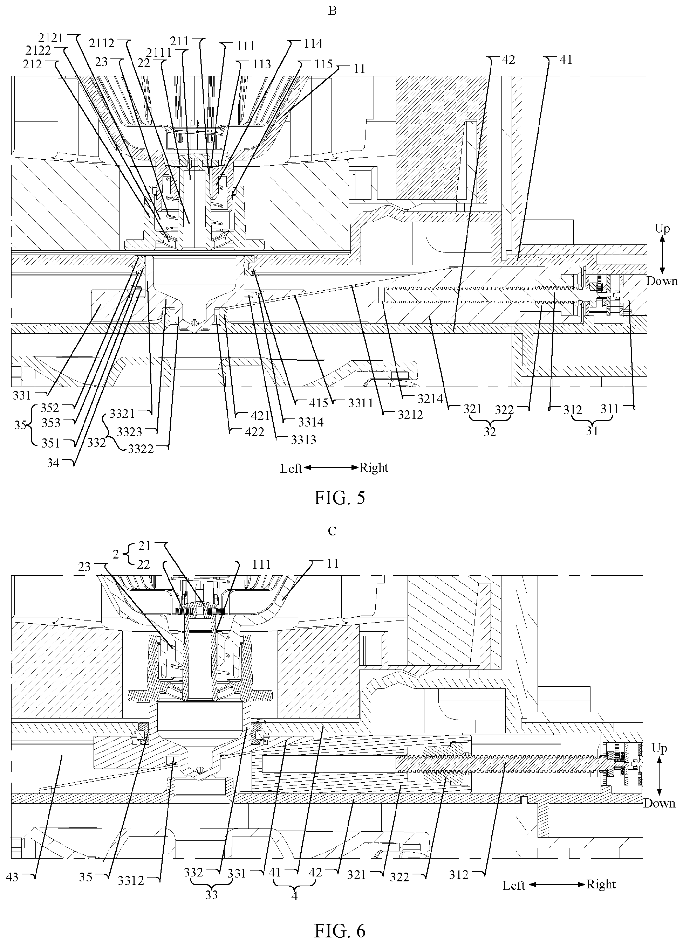

The brewing body 1 has a brewing chamber 11 and a liquid outlet 111 in communication with the brewing chamber 11, as illustrated in FIG. 5 and FIG. 6.

The leak-proof valve 2 is movably mounted at the liquid outlet 111 and has a liquid outflow channel 2112. The liquid outflow channel 2112 is configured to, when being in communication with the liquid outlet 111, discharge liquid from the brewing body 1.

The driving mechanism 3 is connected to the leak-proof valve 2 and configured to, by driving the leak-proof valve 2 to move relative to the brewing body 1, control the liquid outflow channel 2112 and the liquid outlet 111 to be in communication with each other or to be disconnected from each other; and adjust a liquid discharge flow rate of the liquid outflow channel 2112.

The beverage brewing mechanism 100 according to the embodiments of the present disclosure comprises the brewing body 1, the leak-proof valve 2, and the driving mechanism 3. The brewing body 1 has the brewing chamber 11 and the liquid outlet 111. The brewing chamber 11 is configured to hold raw materials for preparing coffee, such as coffee beans and hot water. The extracted coffee is discharged from the brewing chamber 11 through the liquid outlet 111 and flows into a container for holding the coffee (such as a coffee pot 200) through the liquid outflow channel 2112 of the leak-proof valve 2 for a user to drink. The brewing chamber 11 may be funnel-shaped, and the liquid outlet 111 may be disposed at a bottom of the brewing chamber 11. The brewing chamber 11 may be provided with a guide rib 112 on an inner wall surface of the brewing chamber 11.

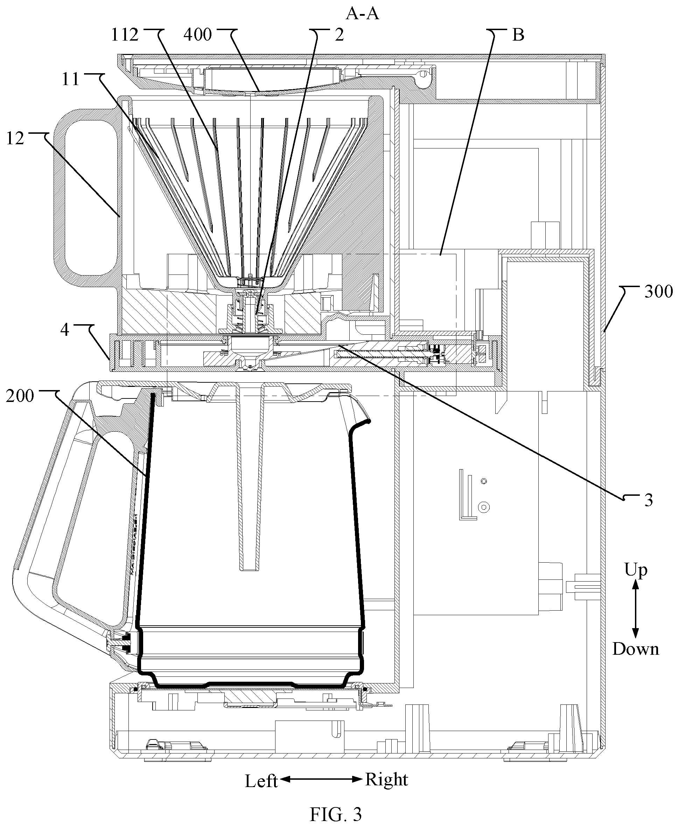

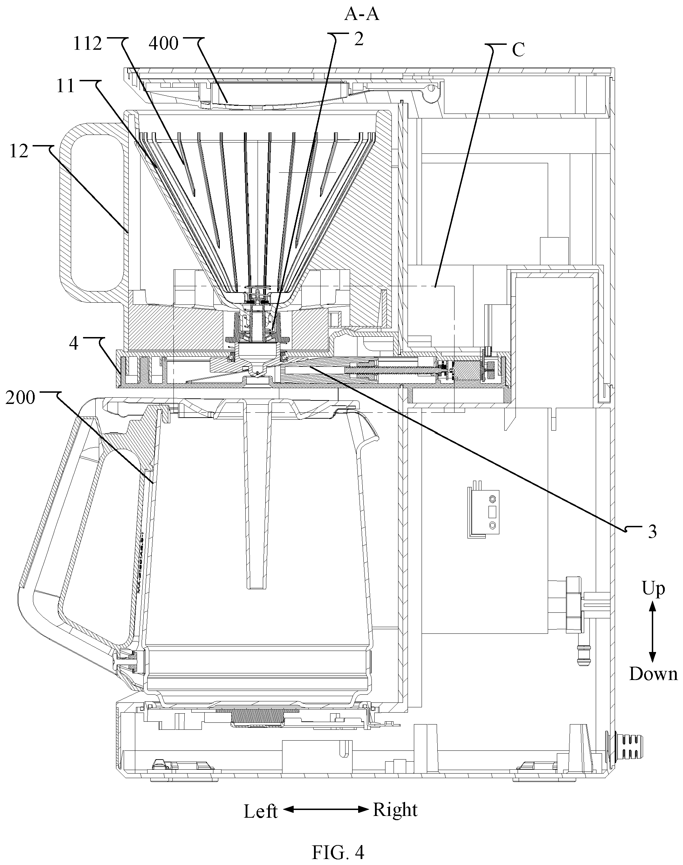

The leak-proof valve 2 is configured to control opening and closing of the liquid outlet 111. When the liquid outflow channel 2112 of the leak-proof valve 2 is in communication with the liquid outlet 111 of the brewing chamber 11, the liquid outlet 111 is opened, as illustrated in FIG. 4 and FIG. 6, allowing the coffee in the brewing chamber 11 to be discharged. When the liquid outflow channel 2112 of the leak-proof valve 2 is disconnected from the liquid outlet 111 of the brewing chamber 11, the liquid outlet 111 is closed, as illustrated in FIG. 3 and FIG. 5, in such a manner that liquid in the brewing chamber 11 cannot be discharged, to avoid wetting a desktop or countertop caused by continuous dripping of liquid (such as residual coffee or residual water remaining in the brewing tank 11 after cleaning the brewing chamber 11) from the brewing chamber 11 after the container for holding the coffee is removed.

The driving mechanism 3 is configured to drive the leak-proof valve 2 to move, to adjust a relative position between the leak-proof valve 2 and the brewing body 1, realizing a control for opening and closing of the liquid outlet 111 by the leak-proof valve 2 and regulation of the liquid discharge flow rate. The driving mechanism 3 may be an electric driving mechanism 3, which facilitates automatic control of the leak-proof valve 2 without manual adjustment by the user, improving use experience of the user.

In the related art, no leak-proof valve is disposed at the liquid outlet, or the leak-proof valve only has an open state and a closed state. Therefore, the liquid discharge flow rate is constant, resulting in a monotonous coffee flavor. In the embodiments of the present disclosure, the leak-proof valve 2 can be opened or closed, and closing of the leak-proof valve 2 can enable a steaming of the coffee. In addition, the liquid discharge flow rate of the liquid outflow channel 2112 is adjustable and related to a concentration of the extracted coffee. When the liquid discharge flow rate is low, the liquid for coffee extraction remains in the brewing chamber 11 for a relatively long time, in such a manner that the extracted coffee has a high concentration and a full-bodied taste. When the liquid discharge flow rate is high, the liquid for the coffee extraction remains in the brewing chamber 11 for a relatively short time, in such a manner that the extracted coffee has a low concentration and a weaker taste. Therefore, by adjusting the liquid discharge flow rate of the liquid outflow channel 2112, the concentration of the coffee can be regulated, which enables controllable steaming of the coffee, thereby enriching the flavor of the coffee to meet the taste requirements of different users.

In some exemplary embodiments, the leak-proof valve 2 comprises a valve core 21. The valve core 21 has a liquid outflow channel 2112 and a liquid inlet 2111 in communication with the liquid outflow channel 2112, as illustrated in FIG. 5, FIG. 6, and FIG. 7. The liquid inlet 2111 allows liquid such as coffee in the brewing chamber 11 to enter the liquid outflow channel 2112.

The valve core 21 is movably mounted at the liquid outlet 111. The valve core 21 is configured to control the liquid inlet 2111 to be opened or closed and to adjust an opening area of the liquid inlet 2111, enabling the liquid outflow channel 2112 and the liquid outlet 111 to be in communication with each other or to be disconnected from each other; and enabling the liquid discharge flow rate of the liquid outflow channel 2112 to be adjusted.

The driving mechanism 3 is connected to the valve core 21 and configured to drive the valve core 21 to move relative to the brewing body 1.

When the liquid inlet 2111 of the leak-proof valve 2 is in communication with the liquid outlet 111 of the brewing chamber 11, the liquid such as coffee in the brewing chamber 11 can enter the liquid outflow channel 2112, realizing communication between the liquid outlet 111 of the brewing chamber 11 and the liquid outflow channel 2112. When the liquid inlet 2111 of the leak-proof valve 2 is disconnected from the liquid outlet 111 of the brewing chamber 11, the liquid such as coffee in the brewing chamber 11 cannot enter the liquid outflow channel 2112, realizing disconnection between the liquid outlet 111 of the brewing chamber 11 and the liquid outflow channel 2112.

By controlling a movement range of the leak-proof valve 2 relative to the brewing body 1, the opening area of the liquid inlet 2111 can be adjusted, which can adjust a flow of liquid flowing into the liquid outflow channel 2112, thereby regulating the liquid discharge flow rate.

In other embodiments of the present disclosure, a movement form of the leak-proof valve 2 is not limited to translation movement. For example, it may also comprise rotation. By rotating the leak-proof valve 2, the opening area of the liquid inlet 2111 can be adjusted, which can adjust the flow of liquid entering the liquid outflow channel 2112, regulating the liquid discharge flow rate. Alternatively, it may also comprise both rotation and translation. By rotating and translating the leak-proof valve 2, the opening area of the liquid inlet 2111 can be adjusted, which can adjust the flow rate of liquid entering the liquid outflow channel 2112, thereby regulating the liquid discharge flow rate.

In some exemplary embodiments, the driving mechanism 3 comprises a driving member 31 and a transmission assembly. The driving member 31 is connected to the transmission assembly and configured to drive the transmission assembly to move. The transmission assembly is connected to the valve core 21 and configured to drive the valve core 21 to move relative to the brewing body 1.

The transmission assembly comprises a transmission member 32 and a linkage member 33. The transmission member 32 is connected to the driving member 31 and configured to move in a first direction under driving of the driving member 31. The linkage member 33 cooperates with the transmission member 32 and the valve core 21 and is configured to move in a second direction under driving of the transmission member 32, to drive the valve core 21 to move in the second direction relative to the brewing body 1. The second direction is different from the first direction.

In this way, it facilitates reasonable selection of the type of driving member 31 and reasonable arrangement of a position of the driving member 31 as desired, which is beneficial to optimizing a structure and layout of the beverage brewing mechanism 100.

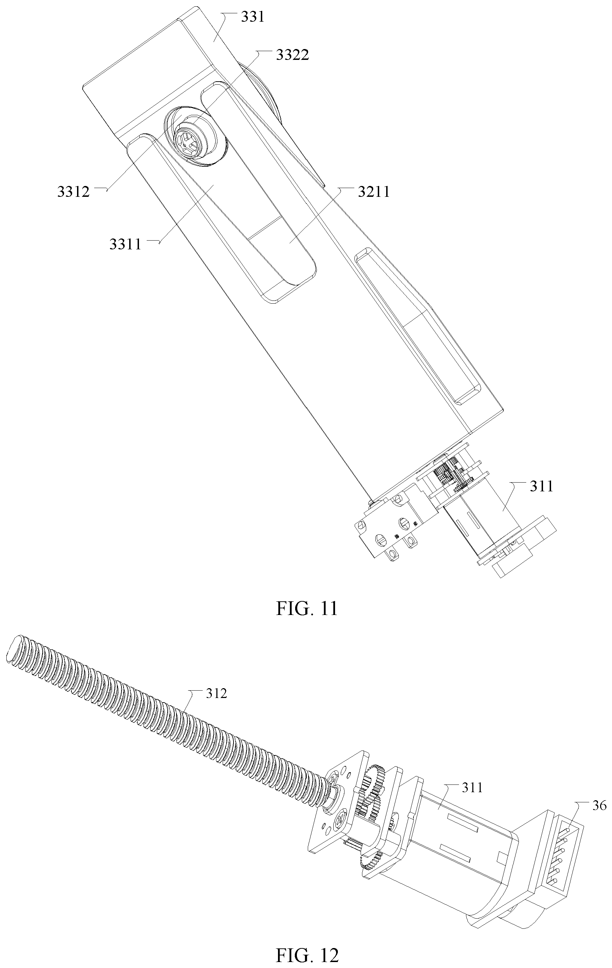

In some exemplary embodiments, the transmission member 32 comprises a driving slide block 321, as illustrated in FIG. 5, FIG. 6, and FIG. 9 to FIG. 11. The driving slide block 321 is configured to slide in the first direction under the drive of the driving member 31. The driving slide block 321 has a driving inclined surface 3212, as illustrated in FIG. 5, FIG. 10, and FIG. 13. The linkage member 33 has a mating inclined surface 3311, as illustrated in FIG. 5 and FIG. 11. The driving inclined surface 3212 is configured to abut against the mating inclined surface 3311 to drive the linkage member 33 to move in the second direction.

In other words, the transmission member 32 cooperates with the linkage member 33 via wedge-shaped inclined surfaces, in such a manner that movement of the transmission member 32 in the first direction is converted into movement of the linkage member 33 in the second direction. The second direction may be perpendicular to the first direction.

In other embodiments of the present disclosure, a cooperation form between the transmission member 32 and the linkage member 33 is not limited thereto. For example, the transmission member 32 may be a gear, and the linkage member 33 may be a rack. The gear rotates in the first direction, which drives the rack to move in the second direction, and the rack drives the valve core 21 to move in the second direction.

In some exemplary embodiments, the linkage member 33 comprises a mating slide block 331 and a liquid outflow nozzle 332 disposed on the mating slide block 331, as illustrated in FIG. 5, FIG. 14, and FIG. 15. The mating slide block 331 is provided with the mating inclined surface 3311. The second direction is an axial direction of the liquid outlet 111. The liquid outflow nozzle 332 is in communication with the liquid outflow channel 2112 and abuts against a bottom of the valve core 21, as illustrated in FIG. 5 and FIG. 6. The axial direction of the liquid outlet 111 is typically vertical, so the second direction is vertical. The first direction may be horizontal.

In this way, the coffee (or other liquid) in the brewing chamber 11, after being discharged through the liquid outflow channel 2112 of the leak-proof valve 2, can be discharged downward via the liquid outflow nozzle 332, which facilitates smooth discharge of the coffee into the container for holding the coffee and helps to prevent the transmission assembly from adversely affecting the smooth discharge of the coffee.

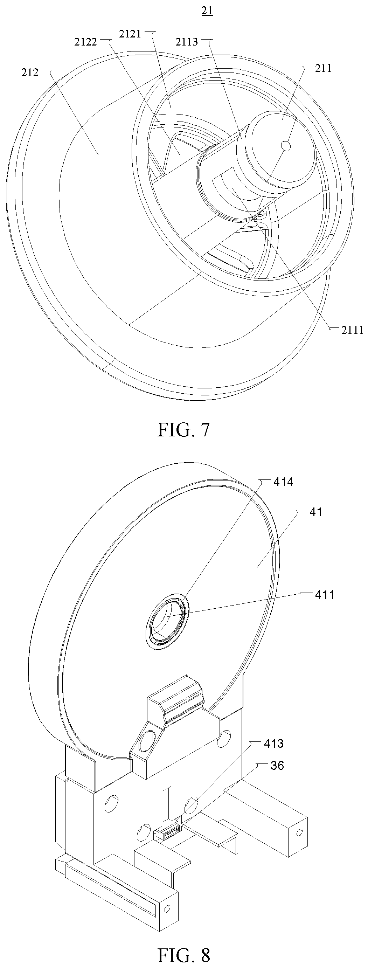

In some exemplary embodiments, the valve core 21 comprises a valve stem 211, as illustrated in FIG. 5 and FIG. 7. The valve stem 211 is inserted into the liquid outlet 111 in the second direction. The liquid inlet 2111 is disposed at a side wall of the valve stem 211, and the liquid outflow channel 2112 is disposed in the valve stem 211.

As illustrated in FIG. 5 and FIG. 7, the valve core 21 further comprises an abutment portion 212 sleeved over an outside of the valve stem 211 and connected to the valve stem 211. A receiving groove 2121 is defined by the abutment portion 212 and the valve stem 211, and the receiving groove 2121 has a liquid discharge port 2122 at a bottom of the receiving groove 2121. A top of the liquid outflow nozzle 332 abuts against the abutment portion 212, and the liquid outflow nozzle 332 is further in communication with the liquid discharge port 2122.

As illustrated in FIG. 3 and FIG. 5, when the leak-proof valve 2 is in a position where the liquid outflow channel 2112 is disconnected from the liquid outlet 111, the liquid inlet 2111 is located outside the brewing chamber 11 and in a closed state. When the leak-proof valve 2 moves upward, the liquid inlet 2111 moves upward accordingly. Once the liquid inlet 2111 starts to enter the brewing chamber 11, the liquid inlet 2111 can be placed in communication with the liquid outlet 111 and in an open state, as illustrated in FIG. 4 and FIG. 6. Different upward displacements of the valve core 21 correspond to different areas of the liquid inlet 2111 entering the brewing chamber 11, leading to different opening areas of the liquid inlet 2111.

A plurality of liquid inlets 2111 may be provided. The plurality of liquid inlets 2111 may be arranged at intervals in a circumferential direction of the valve core 21, or may be arranged at intervals in an axial direction of the valve core 21, or may be arranged at intervals in both the circumferential direction and the axial direction of the valve core 21.

With the provision of the receiving groove 2121, the coffee in a gap between the valve stem 211 and the liquid outlet 111 flows into the receiving groove 2121, and then is discharged into the liquid outflow nozzle 332 through the liquid discharge port 2122 of the receiving groove 2121, preventing liquid that leaks from the gap between the valve core 21 and the liquid outlet 111 from spilling everywhere. A plurality of liquid discharge ports 2122 may be provided and arranged at intervals in a circumferential direction of the receiving groove 2121.

In some exemplary embodiments, as illustrated in FIG. 5, the leak-proof valve 2 further comprises a second sealing member 22 sleeved around the valve core 21 and configured to seal the liquid outlet 111 when the leak-proof valve 2 is in a position where the liquid outlet 111 is disconnected from the liquid outflow channel 2112. An outer diameter of the second sealing member 22 may be greater than a diameter of the liquid outlet 111, and an outer diameter of at least a part of the valve stem 211 may be less than the diameter of the liquid outlet 111. In this way, the valve stem 211 can move up and down along the liquid outlet 111. The second sealing member 22 can close and seal the liquid outlet 111 when abutting against the liquid outlet 111, as illustrated in FIG. 5. The second sealing member 22 is located inside the brewing chamber 11, and the liquid outlet 111 is closed by the second sealing member 22 when the second sealing member 22 moves downward to a final position.

As illustrated in FIG. 5 and FIG. 6, the beverage brewing mechanism 100 further comprises a second elastic member 23 cooperating with the valve core 21 and configured to drive, by means of a restoring force of the second elastic member 23, the leak-proof valve 2 to move in a direction to enable the liquid outlet 111 to be disconnected from the liquid outflow channel 2112. In this way, it helps the leak-proof valve 2 to remain stably in a position where the liquid outlet 111 is closed. In other embodiments of the present disclosure, the leak-proof valve 2 may also not comprise the second elastic member 23, and be maintained, by means of gravity of the leak-proof valve 2, in the position where the liquid outlet 111 is closed.

The abutment portion 212 of the valve core 21 may also be configured to cooperate with the second elastic member 23. The second elastic member 23 may be a spring, which is sleeved over the outside of the valve stem 211. The spring has an end abutting against the abutment portion 212 and another end abutting against the brewing body 1 and located outside the brewing chamber 11. During upward movement of the valve core 21, the second elastic member 23 is compressed to store elastic potential energy. During downward movement of the valve core 21, the second elastic member 23 releases the elastic potential energy and provides a downward force on the valve core 21, helping the valve core 21 to remain stably in the position where the liquid outlet 111 is closed. The abutment portion 212 and the valve stem 211 may be an integral structure or a split-type assembly structure.

The second sealing member 22 may be a sealing ring. The valve stem 211 may have a sealing groove 2113, as illustrated in FIG. 5 and FIG. 7. The second sealing member 22 is sleeved around the sealing groove 2113. When the leak-proof valve 2 moves downward to the position where the liquid outlet 111 is closed, the second sealing member 22 abuts against an inner bottom wall of the brewing chamber 11 to seal the liquid outlet 111, as illustrated in FIG. 5. During mounting, a top of the valve stem 211 can pass through the liquid outlet 111 from bottom to top, and then the second sealing member 22 is fitted onto the valve stem 211 from top to bottom. After being released, the leak-proof valve 2 can stably remain in the position where the liquid outlet 111 is closed under action of gravity and the second elastic member 23.

In some embodiments, as illustrated in FIG. 3 and FIG. 4, the brewing body 1 comprises a brewing cup and a base. The brewing cup comprises the brewing chamber 11 and a cup housing 12 sleeved over an outside of the brewing chamber 11. The brewing chamber 11 and the cup housing 12 may be an integral structure or a split-type assembly structure. The liquid outlet 111 is disposed on the bottom of the brewing chamber 11. The base is fitted inside a bottom of the cup housing 12 and fixedly connected to the brewing cup. The base is provided with an avoidance space corresponding to and in communication with the liquid outlet 111, as illustrated in FIG. 5 and FIG. 6. A part of the leak-proof valve 2 located outside the brewing chamber 11 can be hidden in the avoidance space. The brewing chamber 11 is provided with a first hollow cylindrical portion 114 and a second hollow cylindrical portion 115 that are arranged in a nested manner on an outer bottom wall of the brewing chamber 11, as illustrated in FIG. 5. An internal space of the first hollow cylindrical portion 114 corresponds to and is in communication with the liquid outlet 111. The first hollow cylindrical portion 114 and the second hollow cylindrical portion 115 are also located in the avoidance space. The valve stem 211 passes through the first hollow cylindrical portion 114. The second hollow cylindrical portion 115 is inserted into the receiving groove 2121 of the valve core 21. An upper end of the second elastic member 23 is limited in a gap between the first hollow cylindrical portion 114 and the second hollow cylindrical portion 115. The brewing chamber 11 has a step groove 113 on the inner bottom wall of the brewing chamber 11, as illustrated in FIG. 5. When the leak-proof valve 2 moves downward to the position where the liquid outlet 111 is closed, the second sealing member 22 is located in the step groove 113. The valve stem 211 may be a step shaft, comprising a large diameter shaft segment and a small diameter shaft segment. The liquid inlet 2111 is located on the small diameter shaft segment, which facilitates smooth flow of the coffee into the liquid outflow channel 2112 and the receiving groove 2121.

In some exemplary embodiments, as illustrated in FIG. 2, the beverage brewing mechanism 100 further comprises a mounting base 4, and the driving mechanism 3 is mounted on the mounting base 4. The mounting base 4 has a slide groove 44 extending in the first direction and a guide hole 411 extending in the second direction. The driving slide block 321 is limited in the slide groove 44 and configured to slide along the slide groove 44. The liquid outflow nozzle 332 extends through the guide hole 411 and is configured to move along the guide hole 411.

The mounting base 4 can serve as a mounting carrier for the driving mechanism 3, providing support and protection for the driving mechanism 3. Also, the mounting base 4 can guide and limit the driving slide block 321 and the liquid outflow nozzle 332, helping to improve service reliability of the driving mechanism 3.

In some exemplary embodiments, as illustrated in FIG. 5 and FIG. 6, the mounting base 4 comprises a bottom housing 42 and a cover housing 41. The cover housing 41 is connected to the bottom housing 42 to close the bottom housing, and a mounting cavity 43 is defined by the cover housing 41 and the bottom housing 42, as illustrated in FIG. 6. The slide groove 44 is disposed in the mounting cavity 43. The guide hole 411 is disposed in the cover housing 41. The driving mechanism 3 is at least partially located in the mounting cavity 43.

In this way, the mounting base 4 provides better protection for the driving mechanism 3 and is also conducive to improving simplicity of appearance of the beverage brewing mechanism 100, improving aesthetics of a product.

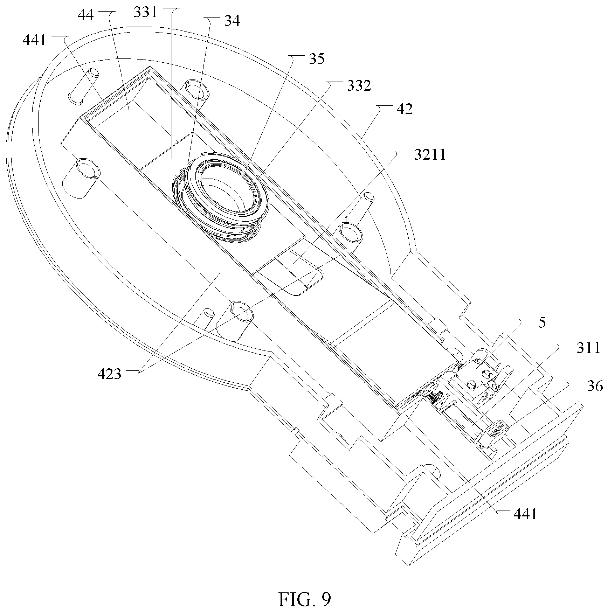

The bottom housing 42 and the cover housing 41 may be separately manufactured and molded, helping to reduce manufacturing difficulty. The bottom housing 42 and the cover housing 41 may be fixed together by means of a threaded connection, a rivet connection, a snap-fit connection, a plug-in connection, etc. The cover housing 41 may be provided with two first guide ribs, and the slide groove 44 is formed between the two first guide ribs. The bottom housing 42 may be provided with two second guide ribs 423, as illustrated in FIG. 9, and the slide groove 44 is formed between the two first guide ribs. Each of the first guide ribs may be respectively arranged to correspond to and abut against a corresponding one of the second guide ribs 423, or each of the first guide ribs may be respectively engaged with a corresponding one of the second guide ribs 423 via a spigot-and-socket fit. In this way, both the bottom housing 42 and the cover housing 41 can limit and guide the driving slide block 321. The slide groove 44 may be provided with a stopping portion 441 at each of two ends of the slide groove 44, as illustrated in FIG. 9, to limit an initial position and a final position of the driving slide block 321.

As illustrated in FIG. 5 and FIG. 8, the cover housing 41 may have a limiting recess 414. The first sealing member 35 may be a sealing ring, and the first sealing member 35 is partially limited in the limiting recess 414 and sleeved between a part of the liquid outflow nozzle 332 inserted into the guide hole 411 and a wall of the guide hole 411.

In some exemplary embodiments, the driving slide block 321 and the mating slide block 331 are located in the mounting cavity 43.

The liquid outflow nozzle 332 extends through the mating slide block 331 in the second direction. As illustrated in FIG. 5, FIG. 14, and FIG. 15, the liquid outflow nozzle 332 comprises a liquid inflow segment 3321 located at a side (i.e., an upper side) of the mating slide block 331 close to the leak-proof valve 2 and a liquid outflow segment 3322 located at a side (i.e., a lower side) of the mating slide block 331 away from the leak-proof valve 2. The liquid outflow segment 3322 may have a plurality of outlets arranged at intervals in a circumferential direction at a bottom of the liquid outflow segment 3322. The liquid inflow segment 3321 extends through the guide hole 411.

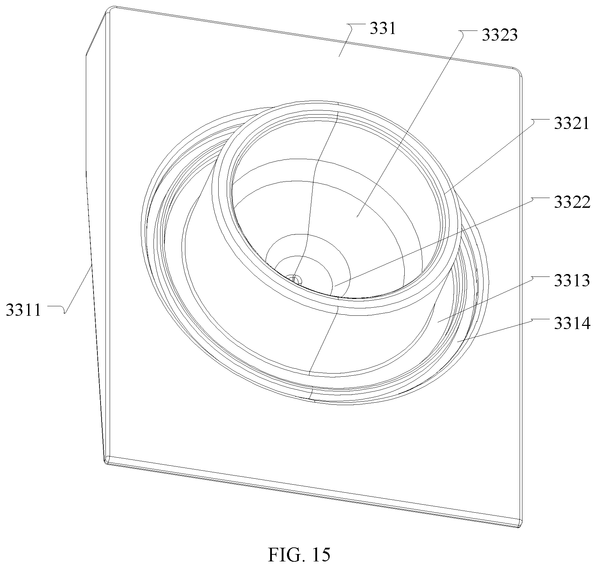

The liquid outflow nozzle 332 and the mating slide block 331 may be an integrated structure or a split-type assembly structure. As illustrated in FIG. 5, the liquid outflow nozzle 332 may be configured as a stepped structure, and the liquid inflow segment 3321 has a flow area larger than that of the liquid outflow segment 3322. In other words, the liquid inflow segment 3321 has a larger diameter to ensure that the coffee in the liquid outflow channel 2112 and the receiving groove 2121 can smoothly flow into the liquid outflow nozzle 332. The liquid outflow segment 3322 has a smaller diameter, which facilitates the smooth flow of the coffee into the container for holding the coffee, avoiding spillage. As illustrated in FIG. 5 and FIG. 15, the liquid outflow nozzle 332 may further comprise a transition segment 3323 located between the liquid inflow segment 3321 and the liquid outflow segment 3322. The transition segment 3323 may be funnel-shaped to facilitate convergence and flow of the coffee into the liquid outflow segment 3322.

The driving slide block 321 has a first avoidance hole 3211 configured to avoid the liquid outflow segment 3322, as illustrated in FIG. 9, FIG. 10, FIG. 11, and FIG. 13. The first avoidance hole 3211 may extend through an end of the driving slide block 321 away from the driving member 31 in the first direction.

The bottom housing 42 has a second avoidance hole 422 corresponding to the liquid outflow segment 3322, as illustrated in FIG. 5. The liquid outflow segment 3322 extends through the second avoidance hole 422 based on a fact that the liquid outflow channel 2112 is disconnected from the liquid outlet 111. The second avoidance hole 422 may be a circular hole.

In some exemplary embodiments, the mating slide block 331 has an annular avoidance groove 3312 at a bottom of the mating slide block 331, as illustrated in FIG. 5, FIG. 11, and FIG. 14. The avoidance groove 3312 is arranged around an outside of the liquid outflow segment 3322. The bottom housing 42 is provided with an annular limiting protrusion 421, as illustrated in FIG. 5. The limiting protrusion 421 defines the second avoidance hole 422. The limiting protrusion 421 is received in the avoidance groove 3312 when the liquid outflow channel 2112 is disconnected from the liquid outlet 111, as illustrated in FIG. 5. In this way, it helps improve positional stability of the liquid outflow nozzle 332 and the mating slide block 331 when the liquid outlet 111 is closed.

In some exemplary embodiments, the driving mechanism 3 further comprises a first elastic member 34 and a first sealing member 35, as illustrated in FIG. 5 and FIG. 6.

The first elastic member 34 cooperates with the linkage member 33 and is configured to drive, by means of a restoring force of the first elastic member 34, the linkage member 33 to move in the second direction away from the valve core 21. A limiting recess 3314 may be provided on a top surface of the mating slide block 331, as illustrated in FIG. 5 and FIG. 15. The first elastic member 34 may be a spring, which is sleeved over the outside of the liquid inflow segment 3321 of the liquid outflow nozzle 332. The first elastic member 34 has a lower end that is embedded in the limiting recess 3314 of the mating slide block 331 and an upper end that abuts against the cover housing 41 and may be sleeved over an outside of a limiting step 415 of the cover housing 41. The limiting recess 3314 may be located outside of the second mounting groove 3313 in a radial direction.

As illustrated in FIG. 6, the first sealing member 35 is sleeved between the liquid outflow nozzle 332 and the guide hole 411 to seal a gap between the liquid outflow nozzle 332 and the guide hole 411.

During upward movement of the linkage member 33, the first elastic member 34 is compressed, storing the elastic potential energy. During downward movement of the linkage member 33, the first elastic member 34 releases the elastic potential energy, providing a downward force on the linkage member 33, which helps the linkage member 33 to remain stably in a position where the linkage member 33 abuts against the bottom housing 42.

In other embodiments of the present disclosure, the driving mechanism 3 may also not comprise the first elastic member 34. The linkage member 33 is maintained, by its own weight, in the position where the linkage member 33 abuts against the bottom housing 42.

In some examples, as illustrated in FIG. 5, the first sealing member 35 comprises an annular sealing body 351, a first lip 352 and a second lip 353. The first lip 352 and the second lip 353 are arranged on two axial ends of the sealing body 351, respectively. The first lip 352 and the second lip 353 each extend outward in a radial direction of the sealing body 351. The cover housing 41 has a first mounting groove recessed on an outer top wall of the cover housing 41, as illustrated in FIG. 5 and FIG. 8. The first lip 352 is limited in the first mounting groove. The limiting step 415 may protrude downward from an inner top wall of the cover housing 41, as illustrated in FIG. 5. The second lip 353 abuts against a lower end surface of the limiting step 415. The mating slide block 331 may have a second mounting groove 3313 recessed on an upper surface of the mating slide block 331, as illustrated in FIG. 5 and FIG. 15. The second mounting groove 3313 is configured to cooperate with the second lip 353. When the valve core 21 moves upward to the final position, the second lip 353 is inserted into the second mounting groove 3313, as illustrated in FIG. 6, to limit a final position of the liquid outflow nozzle 332.

In some exemplary embodiments, as illustrated in FIG. 5, FIG. 6, and FIG. 12, the driving member 31 comprises a driving motor 311 and a lead screw 312 connected to the driving motor 311. The driving slide block 321 has a threaded hole therein, and the lead screw 312 is threadedly connected to the threaded hole.

The driving motor 311 drives the lead screw 312 to rotate, and the lead screw 312 drives the driving slide block 321 to slide in the first direction. The lead screw 312 may be a single-start lead screw 312, a double-start lead screw 312, or a multi-start lead screw 312. By adjusting a rotation range of the driving motor 311, a rotation range of the lead screw 312 can be adjusted, which increases a sliding range of the entire driving slide block 321, thereby adjusting lifting ranges of the linkage member 33 and the leak-proof valve 2.

The driving member 31 may further comprise a gear transmission mechanism located between the driving motor 311 and the lead screw 312, which facilitates adjustment of a transmission ratio.

As illustrated in FIG. 8 and FIG. 9, the driving mechanism 3 may further comprise a connector 36 electrically connected to the driving motor 311. The mounting base 4 may have a mounting notch 413, as illustrated in FIG. 8. The connector 36 may extend out of the mounting base 4 via the mounting notch 413, facilitating electrical connection with a main control board in a base 300 of the coffee machine. The base 300 may correspond to the connector 36, and the electrical connection between the driving mechanism 3 and the main control board is realized through connection of the connector 36, in such a manner that the main control board can control the driving mechanism 3.

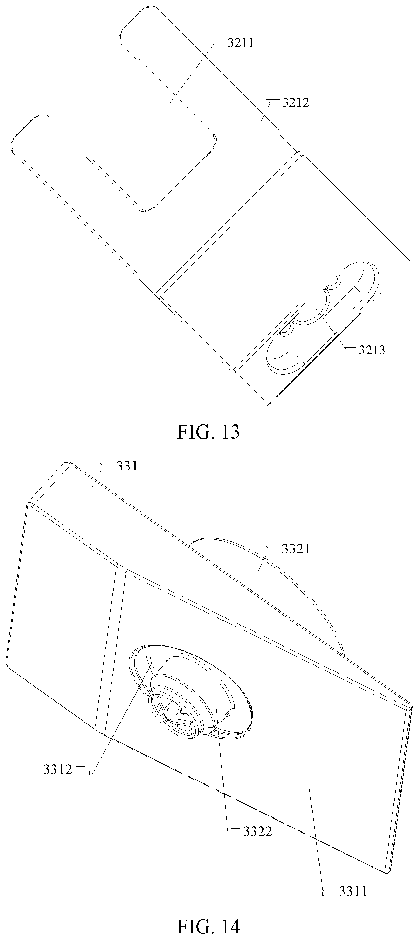

In some exemplary embodiments, the driving slide block 321 internally has a mounting counterbore 3213, as illustrated in FIG. 13. The mounting counterbore 3213 is internally provided with a nut 322, as illustrated in FIG. 5 and FIG. 6. The nut 322 has the threaded hole. The driving slide block 321 further has a third avoidance hole 3214 in communication with the threaded hole, as illustrated in FIG. 5. The third avoidance hole 3214 is configured to avoid a part of the lead screw 312 that extends through the nut 322, which helps simplify a structure of the driving slide block 321 and facilitates manufacturing and molding of the driving slide block 321.

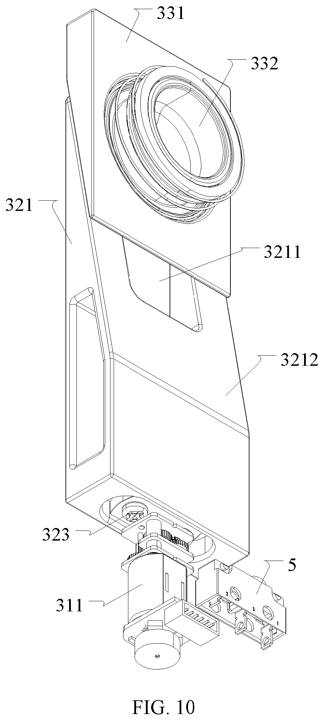

The nut 322 can be fixedly connected to the driving slide block 321 by means of a threaded connection, a rivet connection, a snap-fit connection, etc. For example, the mounting nut 322 has two holes and is fixedly connected to the driving slide block 321 via two screws 323 (as illustrated in FIG. 10). The nut 322 may also be integrally formed with the driving slide block 321 through processes such as a plastic overmolding process.

In some exemplary embodiments, as illustrated in FIG. 9 and FIG. 10, the beverage brewing mechanism 100 further comprises a position detection mechanism 5 configured to directly or indirectly detect a position of the leak-proof valve 2.

The position detection mechanism 5 can directly detect the position of the leak-proof valve 2, and therefore the position detection mechanism 5 can be disposed at a movement path of the leak-proof valve 2. Since the position of the leak-proof valve 2 corresponds to a state of the driving mechanism 3, the position detection mechanism 5 can also indirectly detect the position of the leak-proof valve 2 by detecting the driving mechanism 3, for example, by detecting the position of the transmission member 32 or the linkage member 33. The position detection mechanism 5 may be mounted on the mounting base 4.

In an example, the driving slide block 321 reciprocates between an initial position and a final position. When the driving slide block 321 is in the initial position, the linkage member 33 and the leak-proof valve 2 are also in the initial position, and the leak-proof valve 2 closes the liquid outlet 111 in this case. When the driving slide block 321 is in the final position, the linkage member 33 and the leak-proof valve 2 are also in the final position. In this case, the leak-proof valve 2 opens the liquid outlet 111, and the liquid discharge flow rate of the liquid outflow channel 2112 is maximized. The position detection mechanism 5 may comprise a first position sensor and a second position sensor. The first position sensor is configured to detect the driving slide block 321 in the initial position, and the second position sensor is configured to detect the driving slide block 321 in the final position. A specific form of the position sensor is not limited. The position sensor may be a contact sensor, a proximity sensor, or other types of sensors.

In other examples, the position detection mechanism 5 comprises an angle sensor configured to detect a rotation angle of the driving motor 311 or a rotation angle of the lead screw 312.

In some other exemplary embodiments, the leak-proof valve 2 and the driving mechanism 3 are integrated into an electric valve. The electric valve may be, but is not limited to, an electric flow valve. A structural form of the electric valve is not limited. The electric valve may be a solenoid valve or other types of valves.

As illustrated in FIG. 1 to FIG. 6, the embodiments of the present disclosure further provide a coffee machine. The coffee machine comprises a base 300, and the beverage brewing mechanism 100 according to any one of the above-described embodiments. The beverage brewing mechanism 100 is mounted on the base 300.

Since the coffee machine according to the embodiments of the present disclosure comprises the beverage brewing mechanism 100 according to any one of the above-described embodiments, it has all the above-described beneficial effects, and thus details thereof will be omitted here.

In some exemplary embodiments, the coffee machine further comprises a control device (not shown in the figures, which may be a main control board) electrically connected to the driving mechanism 3 of the beverage brewing mechanism 100, configured to control the driving mechanism 3 according to a predetermined program, and capable of controlling activation, deactivation, and operating parameters (such as speed, time, and power) of the driving mechanism 3.

In this way, brewing programs for coffees of different flavors can be stored in the control device, and the driving mechanism 3 can be automatically controlled by the control device to prepare the coffees of different flavors, helping improve the use experience of the user.

In some exemplary embodiments, as illustrated in FIG. 1 to FIG. 4, the coffee machine further comprises a coffee pot 200, which may be placed below the beverage brewing mechanism 100 to hold the coffee discharged from the beverage brewing mechanism 100. The coffee machine further comprises a water addition mechanism 400 in communication with the brewing chamber 11 and configured to add water to the brewing chamber 11. A water outlet of the water addition mechanism 400 may be located above the brewing chamber 11, in such a manner that water can be added to the brewing chamber 11 in a shower-like manner. The control device is also electrically connected to the water addition mechanism 400 and can control activation, deactivation, and operating parameters (such as temperature, time, and flow) of the water addition mechanism 400.

An operating principle of the coffee machine is as follows:
As illustrated in FIG. 3 and FIG. 5, in an initial state, the driving slide block 321, the mating slide block 331, the liquid outflow nozzle 332, and the leak-proof valve 2 are all in the initial position. The second sealing member 22 of the leak-proof valve 2 presses against the liquid outlet 111 to close the liquid outlet 111, thereby disconnecting the liquid outlet 111 from the liquid outflow channel 2112 of the leak-proof valve 2. In this case, the first elastic member 34 and the second elastic member 23 can be in a natural or slightly compressed state. The liquid outflow nozzle 332, the mating slide block 331, and the leak-proof valve 2 are at their lowest positions in their movement range. The liquid outflow segment 3322 of the liquid outflow nozzle 332 is inserted into the second avoidance hole 422 of the bottom housing 42, and the limiting protrusion 421 of the bottom housing 42 is inserted into the avoidance groove 3312 of the mating slide block 331.

When the user needs the coffee, the water addition mechanism 400 adds water to the brewing chamber 11. The driving motor 311 operates to drive the lead screw 312 to rotate. The lead screw 312 drives the driving slide block 321 to slide leftward. The driving slide block 321 drives the mating slide block 331 and the liquid outflow nozzle 332 to move upward. The liquid outflow nozzle 332 pushes against the leak-proof valve 2 and moves upward, allowing the second sealing member 22 to leave the liquid outlet 111 to open the liquid outlet 111. In addition, the liquid inlet 2111 of the valve stem 211 is lifted and begins to enter the brewing chamber 11, realizing the communication between the liquid outlet 111 and the liquid outflow channel 2112. As the leak-proof valve 2 moves upward, a part of the liquid inlet 2111 entering the brewing chamber 11 gradually increases, gradually increasing the opening area of the liquid inlet 2111 and the liquid discharge flow rate of the liquid outflow channel 2112. According to different coffee flavors selected by the user, the driving motor 311 rotates within different ranges, in such a manner that the driving slide block 321 can slide within different ranges, driving the mating slide block 331, the liquid outflow nozzle 332, and the leak-proof valve 2 to lift by different ranges. In this way, the liquid inlet 2111 is opened to different degrees, thereby forming different liquid discharge flow rates and producing coffee having different tastes. During the upward movement of the mating slide block 331, the liquid outflow nozzle 332, and the leak-proof valve 2, elastic deformation and compression of the first elastic member 34 and the second elastic member 23 gradually increase, thereby storing the elastic potential energy.

When the driving slide block 321 slides leftward to the final position (as illustrated in FIG. 4 and FIG. 6), the mating slide block 331, the liquid outflow nozzle 332, and the leak-proof valve 2 are also lifted to the final positions. In this case, the opening area of the liquid inlet 2111 is maximized, and the liquid discharge flow rate of the liquid outflow channel 2112 reaches the maximum. In addition, the second lip 353 of the first sealing member 35 is embedded into the second mounting groove 3313. The mating slide block 331 is lifted to the final position, allowing the liquid outflow segment 3322 of the liquid outflow nozzle 332 to be disconnected from the second avoidance hole 422 of the bottom housing 42, and the limiting protrusion 421 of the bottom housing 42 to be disconnected from the avoidance groove 3312 of the mating slide block 331.

When the coffee is not needed, the liquid outlet 111 needs to be closed. The driving motor 311 rotates reversely to drive the driving slide block 321 to slide in the reverse direction. The mating slide block 331, the liquid outflow nozzle 332, and the leak-proof valve 2 can move downward under the action of gravity and the restoring force from the first elastic member 34 and the second elastic member 23, and return to the initial position.

In the description of the present disclosure, it should be understood that the orientation or the position indicated by terms such as "center", "longitudinal", "transverse", "length", "width", "thickness", "upper", "below", "front", "rear", "left", "right", "vertical", "horizontal", "top", "bottom", "inner", "outer", "clockwise", "anti-clockwise", "axial", "radial", and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms "first" and "second" are only used for descriptive purposes, and cannot be understood as indicating or implying relative importance or implicitly indicating the number of indicated technical features. Therefore, the features defined with "first" and "second" may explicitly or implicitly comprise at least one of the features. In the description of the present disclosure, "plurality" means at least two, such as two and three, unless otherwise specifically defined.

In the present disclosure, unless otherwise clearly specified and limited, terms such as "install", "connect", "connect to", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise specifically defined. For those of ordinary skill in the art, the specific meaning of the above-mentioned terms in the present disclosure can be understood according to specific circumstances.

In the present disclosure, unless specified or limited otherwise, the first characteristic "on" or "under" the second characteristic may mean that the first characteristic and the second characteristic are in direct contact with each other or in indirect contact via media. And, the first characteristic "on", "above", "over" the second characteristic may mean that the first characteristic is right over the second characteristic or is diagonally above the second characteristic, or just mean that the horizontal height of the first characteristic is higher than the horizontal height of the second characteristic. The first characteristic "below" or "under" the second characteristic may mean that the first characteristic is right over the second characteristic or is diagonally under the second characteristic, or just mean that the horizontal height of the first characteristic is lower than the horizontal height of the second characteristic.

In the description of the present specification, reference to the terms such as "an embodiment," "some embodiments," "an example," "a specific example," or "some examples" means that a particular feature, structure, material, or characteristic described in connection with the embodiment or example is comprised in at least one embodiment or example of the present disclosure. The illustrative expressions of the above terms as used in this specification do not necessarily refer to the same embodiment or example. Furthermore, the particular features, structures, materials, or characteristics described may be combined in any suitable manner in one or more embodiments or examples. In addition, unless otherwise conflicting, those skilled in the art will appreciate that the different embodiments or examples described in this specification, as well as the features in the different embodiments or examples, may be combined or integrated.

Although embodiments of the present disclosure have been shown and described above, it should be understood that above embodiments are merely exemplary, and cannot be construed to limit the present disclosure. For those skilled in the art, changes, alternatives, and modifications can be made to the embodiments without departing from the scope of the present disclosure.

## Claims

1. A beverage brewing mechanism, comprising:
a brewing body having a brewing chamber and a liquid outlet in communication with the brewing chamber;
a leak-proof valve movably mounted at the liquid outlet and having a liquid outflow channel, the liquid outflow channel being configured to, when being in communication with the liquid outlet, discharge liquid from the brewing body; and
a driving mechanism connected to the leak-proof valve, the driving mechanism being configured to, by driving the leak-proof valve to move relative to the brewing body:
control the liquid outflow channel and the liquid outlet to be in communication with each other or to be disconnected from each other; and
adjust a liquid discharge flow rate of the liquid outflow channel.

2. The beverage brewing mechanism according to claim 1, wherein:
the leak-proof valve comprises a valve core, the valve core having the liquid outflow channel and a liquid inlet in communication with the liquid outflow channel;
the valve core is movably mounted at the liquid outlet, and the valve core is configured to control the liquid inlet to be opened or closed and to adjust an opening area of the liquid inlet, enabling the liquid outflow channel and the liquid outlet to be in communication with each other or to be disconnected from each other and enabling the liquid discharge flow rate of the liquid outflow channel to be adjusted; and
the driving mechanism is connected to the valve core and configured to drive the valve core to move relative to the brewing body.

3. The beverage brewing mechanism according to claim 2, wherein the driving mechanism comprises:
a transmission assembly connected to the valve core and configured to drive the valve core to move relative to the brewing body; and
a driving member connected to the transmission assembly and configured to drive the transmission assembly to move,
wherein the transmission assembly comprises:
a transmission member connected to the driving member and configured to move in a first direction under driving of the driving member; and
a linkage member configured to, by cooperating with the transmission member and the valve core, move in a second direction under driving of the transmission member to drive the valve core to move in the second direction relative to the brewing body, the second direction being different from the first direction.

4. The beverage brewing mechanism according to claim 3, wherein the transmission member comprises a driving slide block configured to slide in the first direction under the driving of the driving member, the driving slide block having a driving inclined surface, and the linkage member having a mating inclined surface, wherein the driving inclined surface is configured to abut against the mating inclined surface to drive the linkage member to move in the second direction.

5. The beverage brewing mechanism according to claim 4, wherein the linkage member comprises a mating slide block and a liquid outflow nozzle disposed on the mating slide block, wherein:
the mating inclined surface is provided on the mating slide block,
the second direction is an axial direction of the liquid outlet; and
the liquid outflow nozzle is in communication with the liquid outflow channel and abuts against a bottom of the valve core.

6. The beverage brewing mechanism according to claim 5, wherein:
the valve core comprises a valve stem inserted into the liquid outlet in the second direction, the liquid inlet being disposed on a side wall of the valve stem, and the liquid outflow channel being disposed in the valve stem; and
the valve core further comprises an abutment portion sleeved over an outside of the valve stem and connected to the valve stem, wherein a receiving groove is defined by the abutment portion and the valve stem, the receiving groove having a liquid discharge port at a bottom of the receiving groove, and
wherein a top of the liquid outflow nozzle abuts against the abutment portion, and the liquid outflow nozzle is further in communication with the liquid discharge port.

7. The beverage brewing mechanism according to claim 5 or claim 6, further comprising:
a mounting base, wherein the driving mechanism is mounted on the mounting base, and wherein the mounting base has a slide groove extending in the first direction and a guide hole extending in the second direction, the driving slide block being limited in the slide groove and configured to slide along the slide groove, and the liquid outflow nozzle extending through the guide hole and being configured to move along the guide hole.

8. The beverage brewing mechanism according to claim 7, wherein the mounting base comprises:
a bottom housing; and
a cover housing connected to the bottom housing to close the bottom housing, a mounting cavity being defined by the cover housing and the bottom housing, the slide groove being disposed in the mounting cavity, the guide hole being disposed in the cover housing, and the driving mechanism being at least partially located in the mounting cavity.

9. The beverage brewing mechanism according to claim 8, wherein:
the driving slide block and the mating slide block are both located in the mounting cavity;
the liquid outflow nozzle extends through the mating slide block in the second direction, and the liquid outflow nozzle comprises a liquid inflow segment located at a side of the mating slide block close to the leak-proof valve and a liquid outflow segment located at a side of the mating slide block away from the leak-proof valve, the liquid inflow segment extending through the guide hole;
the driving slide block has a first avoidance hole configured to avoid the liquid outflow segment; and
the bottom housing has a second avoidance hole corresponding to the liquid outflow segment, wherein the liquid outflow segment extends through the second avoidance hole when the liquid outflow channel is disconnected from the liquid outlet.

10. The beverage brewing mechanism according to claim 9, wherein:
the mating slide block has an annular avoidance groove at a bottom of the mating slide block, the avoidance groove being sleeved over an outside of the liquid outflow segment; and
the bottom housing is provided with an annular limiting protrusion, the second avoidance hole being defined by the limiting protrusion, and
wherein the limiting protrusion is received in the avoidance groove when the liquid outflow channel is disconnected from the liquid outlet.

11. The beverage brewing mechanism according to any one of claims 7 to 10, wherein the driving mechanism further comprises:
a first elastic member cooperating with the linkage member and configured to drive, by means of a restoring force of the first elastic member, the linkage member to move in the second direction away from the valve core; and/or
a first sealing member sleeved between the liquid outflow nozzle and the guide hole and configured to seal a gap between the liquid outflow nozzle and the guide hole.

12. The beverage brewing mechanism according to any one of claims 4 to 11, wherein:
the driving member comprises a driving motor and a lead screw connected to the driving motor; and
the driving slide block internally has a threaded hole, the lead screw being threadedly connected to the threaded hole.

13. The beverage brewing mechanism according to any one of claims 2 to 12, wherein:
the leak-proof valve further comprises a second sealing member sleeved over the valve core and configured to seal the liquid outlet when the leak-proof valve is in a position where the liquid outlet is disconnected from the liquid outflow channel; and/or
the beverage brewing mechanism further comprises a second elastic member cooperating with the valve core and configured to drive, by means of a restoring force of the second elastic member, the leak-proof valve to move in a direction to enable the liquid outlet to be disconnected from the liquid outflow channel.

14. A coffee machine, comprising:
a base;
a beverage brewing mechanism according to any one of claims 1 to 13, wherein the beverage brewing mechanism is mounted on the base; and
a control device electrically connected to a driving mechanism of the beverage brewing mechanism and configured to control the driving mechanism according to a predetermined program.
